# EUROPEAN PATENT APPLICATION

(11) **EP 1 128 671 A2**
(43) Date of publication of application: **29.08.2001**
(21) Application number: 00127092.5
(22) Date of filing: 11.12.2000
(51) Int. Cl.: H04N 5/445

(54) **Program guide displaying apparatus and method**

(30) Priority: 22.02.2000 JP 2000050500
(71) Applicant: Pioneer Corporation, Tokyo-to (JP)
(72) Inventor: Inoue, Tatsu, c/o Pioneer Corporation Ohmori Works, Tokyo-to (JP)
(74) Representative: Viering, Jentschura & Partner

(57) **Abstract**

A program guide displaying apparatus (1) is provided with: a program information obtaining device (3 to 7) for obtaining program information including information indicative of a program name, a genre name, a start time, a length of a program or an end time, a broadcasting channel and a broadcasting date of respective one of a plurality of programs; a setting device (12, 13, 7) for setting a specific condition with respect to at least one of a time and a channel of the program; and a displaying device (8, 9, 200) for displaying a first program table, in which a plurality of program information for the programs are displayed in a 2-dimension of a time axis and a channel axis, and a second program table, in which the plurality of program information for the programs are edited for each genre, such that a portion of each program within the first program table and a portion of each genre within the second program table are displayed in a common display manner, which is differentiated for each genre, and that a portion of each program, which satisfies the specific condition set by said setting device is displayed in a display manner different from that for a portion of each program, which does not satisfy the specific condition set by said setting device.

## Description

### BACKGROUND OF THE INVENTION

### 1. Field of the Invention

The present invention relates to an EPG (Electronic Program Guide).

### 2. Description of the Related Art

There is a digital broadcasting system, in which a digitized television signal is transmitted through a broadcasting satellite, a communicating satellite or the like, and is received by each home so that a user can view a television program. In such a system, since a plurality of channels can be reserved, it is possible to broadcast a large number of programs.

In the digital broadcasting system, information related to an EPG indicating the broadcasting contents of a large number of programs is transmitted from the satellite to each home together with video and audio information of the programs. At each home, the user operates a receiving apparatus so as to display the EPG on a TV (Television) set and search for his or her favorite program. Normally, in the display of the EPG, the user uses a remote control device attached to the receiving apparatus to search for the favorite program.

However, in this kind of digital broadcasting system, since more than 100 channels can be watched, it is a time and labor consuming job for the user to search for the favorite program from among the channels and select it. Thus, it is desired to display the information, which is considered by the user when searching for a genre, a broadcasting time, a channel and the like of each program, in an easily and visually recognizable manner.

### SUMMARY OF THE INVENTION

It is therefore an object of the present invention to provide an apparatus for and a method of displaying a program guide, which can display information, which is considered by a user when searching for a program, in an easily and visually recognizable manner.

The above object of the present invention can be achieved by a program guide displaying apparatus provided with: a program information obtaining device for obtaining program information including information indicative of a program name, a genre name, a start time, a length of a program or an end time, a broadcasting channel and a broadcasting date of respective one of a plurality of programs; a setting device for setting a specific condition with respect to at least one of a time and a channel of the program; and a displaying device for displaying a first program table, in which a plurality of program information for the programs are displayed in a 2-dimension of a time axis and a channel axis, and a second program table, in which the plurality of program information for the programs are edited for each genre, such that a portion of each program within the first program table and a portion of each genre within the second program table are displayed in a common display manner, which is differentiated for each genre, and that a portion of each program, which satisfies the specific condition set by the setting device is displayed in a display manner different from that for a portion of each program, which does not satisfy the specific condition set by the setting device.

According to the program guide displaying apparatus of the present invention, the plurality of the obtained program information are displayed as the first program table, in which a plurality of program information for the programs are displayed in the 2-dimension of the time axis and the channel axis, and are also displayed as the second program table, in which the plurality of program information for the programs are edited for each genre. Here, the displayed portion of each program within the first program table and the displayed portion of each genre within the second program table are displayed in a common display manner, which is differentiated for each genre. For example, the displayed portion within the first program table and the displayed portion within the second program table, which belong to the same genre to each other are displayed in the same genre color, the same genre pattern etc., respectively for each genre. Further, the displayed portion of each program, which satisfies the specific condition, is displayed in the display manner different from that for the displayed portion of each program, which does not satisfy the specific condition, on the first program table and/or the second program table. Accordingly, it is possible to visually and clearly differentiate the displayed portion satisfying the specific condition from the displayed portion not-satisfying the specific condition, on the first program table and/or the second program table, so that the user can easily search for the program in which the user is interested on the first program table and/or the second program table.

If the specific condition is that the program belongs to a specific broadcasting time band, it is possible for the user to easily identify the program or programs belonging to the specific broadcasting time band. If the specific condition is that the program belongs to a specific channel which is set in advance by the user, it is possible for the user to easily identify the program or programs belonging to the specific channel set in advance by the user. Further, if the common display manner is that at least one of the color and the pattern is the same to each other, it is possible to display the program satisfying the specific condition in a visually outstanding manner.

In one aspect of the program guide displaying apparatus of the present invention, the displaying device displays the first program table and the second program table such that the portion of each program within the first program table and the portion of each genre within the second program table are displayed with a same color for each genre.

According to this aspect, it is possible to visually and clearly differentiate the displayed portion satisfying the specific condition for each genre by virtue of the same color for each genre.

In another aspect of the program guide displaying apparatus of the present invention, the displaying device displays the first program table and the second program table such that the portion of each program within the first program table and the portion of each genre within the second program table are displayed with a same pattern for each genre.

According to this aspect, it is possible to visually and clearly differentiate the displayed portion satisfying the specific condition for each genre by virtue of the same pattern for each genre.

In another aspect of the program guide displaying apparatus of the present invention, the displaying device displays the first program table and the second program table such that the portion of each program, which satisfies the specific condition, is displayed with a color different from that for the portion of each program, which does not satisfy the specific condition.

According to this aspect, it is possible to visually and clearly differentiate the displayed portion satisfying the specific condition for each genre by virtue of the different colors.

In another aspect of the program guide displaying apparatus of the present invention, the displaying device displays the first program table and the second program table such that the portion of each program, which satisfies the specific condition, is displayed with a pattern different from that for the portion of each program, which does not satisfy the specific condition.

According to this aspect, it is possible to visually and clearly differentiate the displayed portion satisfying the specific condition for each genre by virtue of the different patterns.

In another aspect of the program guide displaying apparatus of the present invention, the displaying device displays the first program table and the second program table such that an overlapped portion of the portions displayed in different display manners from each other is displayed in a further different display manner.

According to this aspect, it is possible to visually and clearly differentiate the overlapped portion, where the displayed portion satisfying the specific condition and the displayed portion not-satisfying the specific condition are overlapped with each other, from those displayed portions, by virtue of the different display manners.

The above object of the present invention can be also achieved by a program guide displaying method provided with: a program information obtaining process of obtaining program information including information indicative of a program name, a genre name, a start time, a length of a program or an end time, a broadcasting channel and a broadcasting date of respective one of a plurality of programs; a setting process of setting a specific condition with respect to at least one of a time and a channel of the program; and a displaying process of displaying a first program table, in which a plurality of program information for the programs are displayed in a 2-dimension of a time axis and a channel axis, and a second program table, in which the plurality of program information for the programs are edited for each genre, such that a portion of each program within the first program table and a portion of each genre within the second program table are displayed in a common display manner, which is differentiated for each genre, and that a portion of each program, which satisfies the specific condition set by the setting process is displayed in a display manner different from that for a portion of each program, which does not satisfy the specific condition set by the setting process.

According to the program guide displaying method of the present invention, the plurality of the obtained program information are displayed as the first program table, in which a plurality of program information for the programs are displayed in the 2-dimension of the time axis and the channel axis, and are also displayed as the second program table, in which the plurality of program information for the programs are edited for each genre. Here, the displayed portion of each program within the first program table and the displayed portion of each genre within the second program table are displayed in a common display manner, which is differentiated for each genre. For example, the displayed portion within the first program table and the displayed portion within the second program table, which belong to the same genre to each other are displayed in the same genre color, the same genre pattern etc., respectively for each genre. Further, the displayed portion of each program, which satisfies the specific condition, is displayed in the display manner different from that for the displayed portion of each program, which does not satisfy the specific condition, on the first program table and/or the second program table. Accordingly, it is possible to visually and clearly differentiate the displayed portion satisfying the specific condition from the displayed portion not-satisfying the specific condition, on the first program table and/or the second program table, so that the user can easily search for the program in which the user is interested on the first program table and/or the second program table.

In one aspect of the program guide displaying method of the present invention, the displaying process displays the first program table and the second program table such that the portion of each program within the first program table and the portion of each genre within the second program table are displayed with a same color for each genre.

According to this aspect, it is possible to visually and clearly differentiate the displayed portion satisfying the specific condition for each genre by virtue of the same color for each genre.

In another aspect of the program guide displaying method of the present invention, the displaying process displays the first program table and the second program table such that the portion of each program within the first program table and the portion of each genre within the second program table are displayed with a same pattern for each genre.

According to this aspect, it is possible to visually and clearly differentiate the displayed portion satisfying the specific condition for each genre by virtue of the same pattern for each genre.

In another aspect of the program guide displaying method of the present invention, the displaying process displays the first program table and the second program table such that the portion of each program, which satisfies the specific condition, is displayed with a color different from that for the portion of each program, which does not satisfy the specific condition.

According to this aspect, it is possible to visually and clearly differentiate the displayed portion satisfying the specific condition for each genre by virtue of the different colors.

In another aspect of the program guide displaying method of the present invention, the displaying process displays the first program table and the second program table such that the portion of each program, which satisfies the specific condition, is displayed with a pattern different from that for the portion of each program, which does not satisfy the specific condition.

According to this aspect, it is possible to visually and clearly differentiate the displayed portion satisfying the specific condition for each genre by virtue of the different patterns.

In another aspect of the program guide displaying method of the present invention, the displaying process displays the first program table and the second program table such that an overlapped portion of the portions displayed in different display manners from each other is displayed in a further different display manner.

According to this aspect, it is possible to visually and clearly differentiate the overlapped portion, where the displayed portion satisfying the specific condition and the displayed portion not-satisfying the specific condition are overlapped with each other, from those displayed portions, by virtue of the different display manners.

The nature, utility, and further features of this invention will be more clearly apparent from the following detailed description with respect to preferred embodiments of the invention when read in conjunction with the accompanying drawings briefly described below.

### BRIEF DESCRIPTION OF THE DRAWINGS

FIG. 1 is a block diagram showing a structure of a satellite digital broadcast receiving apparatus as an embodiment of the present invention;
FIG. 2 is a diagram showing a method of transmitting data in a digital broadcast in the embodiment;
FIG. 3 is a plan view of a picture plane showing one example of an EPG display in the embodiment;
FIG. 4 is a diagram schematically showing a concept of a structure of EPG display data in the embodiment;
FIG. 5 is a plan view of a picture plane showing one example of a genre EPG display in the embodiment;
FIG. 6 is a front view of a remote controller used with the receiving apparatus of FIG. 1 in the embodiment;
FIG. 7 is a flowchart showing an EPG display process in the embodiment;
FIG. 8 is a plan view of a picture plane showing one example of a day-of-week EPG display including a channel color display in the embodiment; and
FIG. 9 is a plan view of a picture plane showing one example of the genre EPG display including the channel color display in the embodiment.

### DETAILED DESCRIPTION OF THE PREFERRED EMBODIMENTS

Referring to the accompanying drawings, embodiments of the present invention will be now explained.

### (I) Structure of Receiving Apparatus

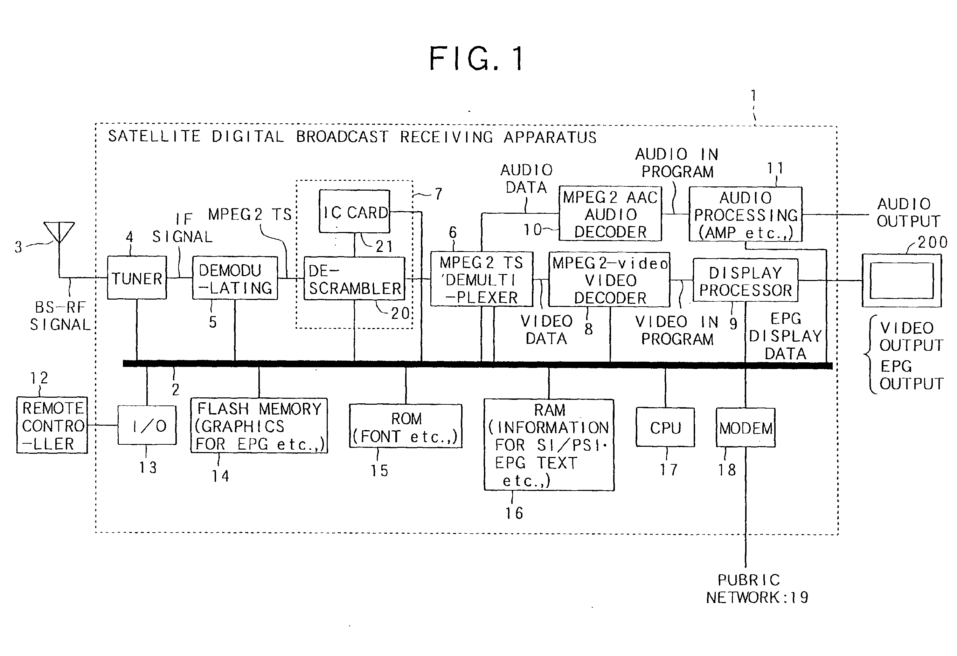

FIG. 1 shows a structure of a satellite digital broadcast receiving apparatus as an embodiment of the present invention. A satellite digital broadcast receiving apparatus 1 shown in FIG. 1 is equipped in each home of a viewer or user, receives a digital broadcast signal (i.e., a broadcast wave) from a satellite and displays a television (TV) program corresponding to it on a picture plane of the television (TV) set at home. Further, the receiving apparatus 1 receives information related to the EPG transmitted from the satellite simultaneously with the digital broadcast signal, and display it on the picture plane of the television set in response to an instruction of the viewer.

As shown in FIG. 1, the receiving apparatus 1 has a structure in which various constitutional elements are connected to a communication bus 2. The receiving apparatus 1 is operative by an attached remote controller 12.

A broadcast wave transmitted from a satellite (i.e., a BS-RF signal) is received by an antenna 3 and is transmitted to a tuner 4 within the receiving apparatus 1. This broadcast wave includes video and audio information of a TV program (which is referred to as "TV program information", hereinafter), as well as the information to be used for displaying the EPG (which is referred to "SI (Service Information)" hereinafter). The tuner 4 is tuned to a receiving band selected by the user, converts the received signal wave to an IF (Intermediate Frequency) signal, and sends it to a demodulating unit 5. The demodulating unit 5 demodulates the inputted digital signal, applies predetermined signal processes such as a reconstruction of data frames, an error correcting process and so forth, and supplies it through a de-scrambler 20 to a demultiplexer 6 in a format of a transport stream (which is referred to as a "TS" hereinafter) of the MPEG 2.

The demultiplexer 6 extracts the audio data and video data corresponding to the selected service from among the inputted TS of the MPEG 2, and supplies them to an audio decoder 10 and a video decoder 8 respectively. Here, the audio data is in the format of MPEG 2-AAC, while the video data is in the format of MPEG 2 -Video. The audio decoder 10 decodes the inputted audio data to generate "program audio data" and supplies it to an audio processing unit 11. The audio processing unit 11 includes an amplifier and applies a predetermined audio signal process onto this program audio data, to thereby generate an audio output.

On the other hand, the video decoder 8 decodes the inputted video data to generate "program video data" and supplies it to a display processor 9. The display processor 9 applies a predetermined process onto this program video data, to thereby output a video output to a TV display device 200. Further, the display processor 9 has a function of superimposing character information on the program video image displayed on the picture plane of the TV displaying device 200. The EPG display data described later in detail is superimposed on the program video data by the display processor 9 and is outputted such that the program video data is partially replaced by the EPG display data, to be thereby displayed on the TV displaying device 200.

The demultiplexer 6 extracts control data including the SI out of the TS in the inputted MPEG 2. The SI is the origin of the EPG display data. The EPG displaying process is performed by using this SI. The control data including the SI extracted by the demultiplexer 6 is stored into a RAM 16 under the control of a CPU 17. Also in the RAM 16, EPG text data to perform the EPG display is stored. A flash memory 14 stores various graphic data to perform the EPG display (e.g., a frame of a program table, a predetermined mark such as a logo mark of each broadcast channel). A ROM 15 stores font data used as the EPG text data and the like.

A limited reception processing unit 7 including the de-scrambler 20 performs a following process. Namely, the limited reception broadcasting of a prior contract (or a prior agreement) type is done by a service unit or a program unit, so that the TS of the relevant MPEG 2 is scrambled (or enciphered) and is then transmitted. The limited reception processing unit 7 consists of the de-scrambler 20, as a de-scramble or decipher processing unit, and an IC card 21 for storing contract information and judging the limitation or allowance of viewing for each user. The IC card 21 is distributed to each user of the receiving apparatus from a service center commonly owned by broadcasting providers. On the IC card 21, the user contract information is described in correspondence with a contract condition between the user and each broadcasting provider. In general, the described content of the IC card 21 is different between the respective users. In case that the user selects the limited broadcast program, the limited reception processing unit 7 uses both of the user contract information stored in the IC card 21 and the de-scrambling related information obtained from the broadcast wave, and thereby performs the de-scrambling process for the TS in the MPEG 2 if the user has a contract for the pertinent service or program. Thus, the user can view this program. On the other hand, if the user does not have such a contract, the de-scrambling process for the TS in the MPEG 2 is not performed, so that the user cannot view this limited reception broadcast program.

Further, in case of the "pay per view program", each time when the user purchases the program, the purchase condition is described into the IC card 21. Then, the pay per view program purchasing information is transmitted from the side of the receiving apparatus 1 to the side of the broadcast provider through the modem 18 and the public network 19 in a predetermined cycle.

The instruction inputted by the user using the remote controller 12 is transmitted through the interface (I/O) 13 to the CPU 17 and is recognized there. The CPU 17 controls the respective constitutional elements within the receiving apparatus 1 in accordance with the instruction given by the user. For example, the instruction to tune a frequency of the channel specified by the user is transmitted to the tuner 4.

In case of the EPG display, the CPU 17 generates the EPG text data from the SI stored in the RAM 16 as the source Next, the CPU 17 generates the EPG display data by using the graphic data such as the frame data for the TV program table stored in the flash memory 14, the font data stored in the ROM 15 as well as the EPG text data, and then supplies it to the display processor 9. The display processor 9 switches the program video data from the video decoder 8 and the EPG display data to each other, on the basis of the switching instruction from the CPU 17, so as to superimpose the EPG display data on the program data and then output it as the video signal to the TV displaying device 200.

To the communication bus 2, the public network 19 is connected via the modem 18, so as to connect the receiving apparatus 1 with a telephone, a personal computer or the like of the user and thereby perform a necessary communication between the broadcasting station and the home of the viewer.

### (II) Signal Format

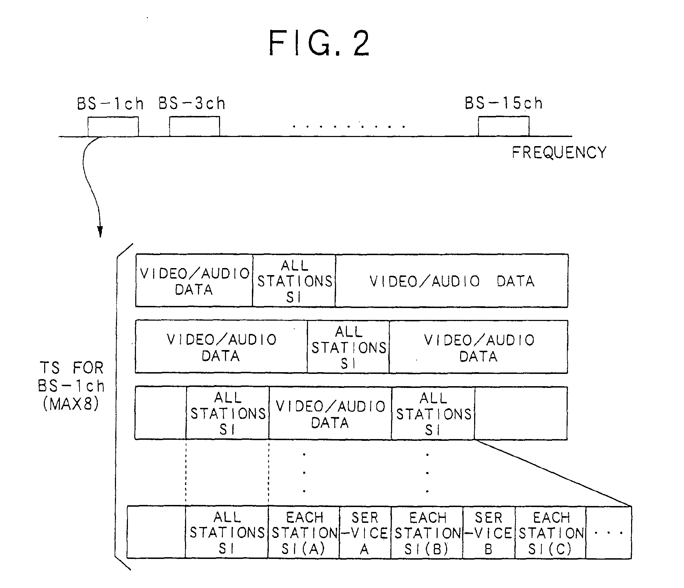

Next, a digital signal is explained, which is transmitted from a satellite as the data, which becomes the source of the EPG display data. FIG. 2 schematically shows a data format of the digital signal. As shown in FIG. 2, in the satellite digital broadcasting system, a plurality of BS channels (bands) are set so that it is possible to transmit 8 TSs in the MPEG 2 at the maximum for each BS channel. Further, it is possible to transmit 32 services at the maximum by one TS. In the following explanation, the frequency band in the satellite broadcast is called as a "BS channel", and is differentiated from the channel for each broadcast program, which is received by the receiving apparatus 1.

In each TS, an all stations SI is multiplexed in the information such as the video information and the audio information. The all stations SI is the SI for all the broadcasting stations, and includes the TV program arrangement information for all the channels. Namely, the all stations SI having the same content is multiplexed on all the TSs of all the BS channels and is then transmitted. By this, even if the channel is received by the user from any one of the broadcasting stations, it is possible to generate the EPG data for all the channels by obtaining the all stations SI included in the TS in this received channel. More concretely, the CPU 17 shown in FIG. 1 obtains the all stations SI from the TS, which is currently being received, by controlling the demultiplexer 6, to thereby constitute the EPG text data on the basis of the obtained all stations SI.

The lower portion of FIG.2 shows the format of the video and audio data in each TS. It has been explained such that the 32 services at the maximum can be transmitted for each TS. These services are time-division-multiplexed in the form of packets within one TS. In the example shown in FIG. 2, the services of the broadcasting stations (e.g., the service A, the service B, ...) are time-division-multiplexed in the TS positioned at the lowest in the figure. Therefore, in order to receive the service A for example, the CPU 17 firstly controls the tuner 4 shown in FIG. 1 to tune the BS channel which includes the TS. Then, the demodulating unit 5 identifies and extracts the TS of the target from among a plurality of TSs included in the BS channel. Then, the demultiplexer 6 extracts the service A, which is time-division-multiplexed in the TS, with referring to the identification information of the service A.

Here, as shown in FIG. 2, at the head of data of each service station (which is indicated by the service A, the service B, ...), the "each station SI" is inserted. The each station SI is the information similar to that of the all stations SI, but includes the information dedicated to respective one of the stations, which is not included in the all stations SI. Namely, the all stations SI includes the information necessary to display the program table as for all the channels as the EPG while the each station SI includes the more detailed information such as the summary of each program. Therefore, the CPU 17 in FIG. 1 obtains the each station SI in response to the instruction of the user, so that the summary information as for a specific channel can be displayed.

### (III) EPG Display Picture Plane

Next, the EPG display picture plane according to the present invention is explained. In the present invention, there are a picture plane of "day-of-week EPG" and a picture plane of "genre EPG", as the EPG display picture plane. The "day-of-week EPG" shows a program table of a plurality of channels for each date (for each day-of-week). In contrast, the "genre EPG" shows a plurality of programs of a plurality of channels categorized into each genre. Hereinbelow, the day-of-week EPG display and the genre EPG will be explained in this order. In addition, the EPG display picture plane may be displayed large over the whole picture plane of the TV display or may be displayed small such that it is superimposed in the video image of the TV program which is being viewed.

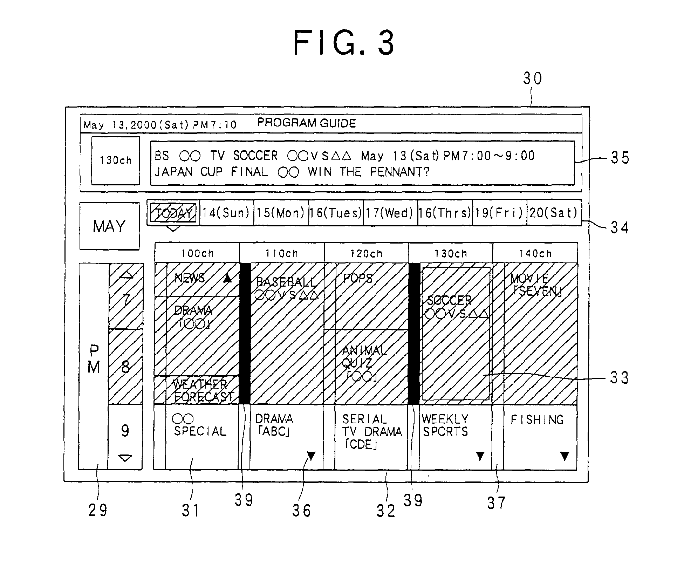

FIG. 3 shows an example of the day-of-week EPG. At the top field of a day-of-week EPG 30, the present date and time is displayed. The day-of-week EPG 30 has a TV program table for eight days from the present day to the day next week, which corresponds to the same day-of-week as the present day as shown in FIG. 3. The TV program table is prepared for all the channels for each day-of-week. If one of the days is specified by the user by using a day-of-week tab 34, the TV program table on the specified day is displayed. Each time when a "day-of-week changing key" 47 of the remote controller 12 as described later is pressed once, the TV program table is changed to one for the next day, so that it returns to the TV program table today after it is changed to the TV program table 7 days ahead of today.

The TV program table is shown in a TV program table display area 32. Each unit divided by the frame is called as a TV program cell 31. On the left side of the TV program table display area 32, there is a time band display area 29. The example of FIG. 3 shows the TV program table having the time band from PM 7:00 to PM 10:00 on May 13^{th}(Sat), 2000. At the upper field of the TV program table display area 32, the TV channels arranged in the lateral direction is shown.

The portion indicated by a cursor 33 (in FIG. 3, which is indicated as a black frame) indicates the program, which is currently selected by the user. In the example of FIG. 3, the program of "soccer ○○ VS Δ Δ" is selected. The summary information as for the program which is currently selected is displayed within a summary information field 35 at the upper portion of FIG. 3. This summary information is generated from the all stations SI in each TS described before, as the source.

By moving the cursor 33 in the left and right direction in FIG. 3 by operating the remote controller 12, it is possible for the user to select the program at the adjacent TV channel. Also, the change in the time axis direction of the currently displayed TV program table is done by moving the cursor 33 in the up and down direction by the remote controller 12. If the cursor 33 is continuously moved in the time axis direction to pass through the PM 12:00, the day-of-week of the TV program table is automatically changed to the next day, so that the cursor 33 is in a condition to select the program cell after AM 00: 00 on the next day. Further, if the cursor 33 is continuously moved to pass through PM 12:00 7 days after ahead of today (e.g., pass through PM 12:00 on 20^{th} (Sat) in the example of FIG. 3), the day-of-week of the TV program table returns to "today", and then the cursor 33 is set in a condition to select the program cell after AM 00:00 today. However, if there is no TV program information in the past, the cursor 33 is set in a condition to select the program cell after the time band for which the program information exists.

In the example of FIG. 3, the program table having a length indicative of 3 hours in the time axis direction and a length indicative of 5 channels in the channel axis direction is shown. However, the present invention is not limited to this. For example, channels in the greater number than 5 may be simultaneously displayed.

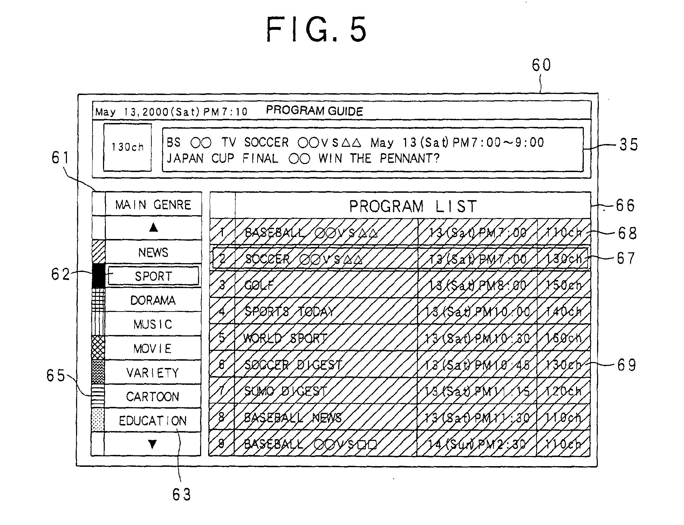

There is a genre color display portion 37 is prepared on a left side within each program cell 31, which extends in a lateral direction. In the receiving apparatus of the present invention, the genres comprise main genres and sub genres. Accordingly, with respect to each program, a main genre and a sub genre are defined. The main genre is a large category of genre, and as shown in FIG. 5, it corresponds to the level of the category such as "news/report", "sport", "drama", "music", "movie" and so on. The sub genre is a fine category, which is prepared for each of the main genres. For example, there are prepared "baseball", "soccer", "golf" and so on, as the sub genres for the main genre of "sport".

Here, the genre color is a color, which is set in advance to indicate respective one of the main genres. Namely, the programs are categorized into several main genres, and the genre color representing respective one of the main genres is determined for each main genre. Since the genre color portion 37 indicates the color of the genre of the program of the program cell 31, it is possible for the user to easily and visually grasp the program of the respective one of the program cells. Normally, the divisions of genre are set in advance on the manufacturing side of the receiving apparatus. Although the selection or assignment of the genre color corresponding to each genre is done on the manufacturing side of the receiving apparatus in advance, the receiving apparatus may be constituted such that the user can freely determine and change the selection or assignment of the genre color. The correspondence information indicating the correspondence or relationship between the main genre and the genre color may be stored in the ROM 15 or the RAM 16.

Further in the present embodiment, a concept of "time band color" is introduced. The time band color indicates a specific color assigned to the program cell or cells in a specific time band, which is determined in advance., For example, "early morning (AM 06:00 to 08:00)", "golden time (PM 07:00 to 09:00)", "late night (PM 11:00 to AM 01:00)" and so on may be set as the time band (which is occasionally referred to as the "specific time band" hereinafter), and a peculiar color is assigned to respective one of these specific time bands. When the program table in the time band corresponding to one of these specific time bands is displayed, the corresponding time band color is given to the respective one of the program cells 31. In the example of FIG. 3, the time band between PM 07:00 and 10:00 is shown and the program cell 31 belonging to the golden time (i.e., PM 07:00 to 09:00) is colored with the predetermined time band color.

Here, at the channel 140 i.e., 140ch (hereinafter, the channel N is referred to simply as the "Nch") in FIG. 3, the program "fishing" starts before PM 09:00. However, sine the time band color is given with respect to the specific time band as explained above, the time band color is displayed until PM 09:00. Incidentally, since the color cannot be actually displayed in FIG. 3, the line at the position corresponding to PM 09:00 of the 140ch is a boundary of the time band color, and is not a boundary line of the program cell. Nevertheless, in the above explained case, as another displaying method, it is possible to give the time band color for each program cell, which is wholly or partially included in the specific time band. In case that the time band color is given for each program cell which is wholly included in the specific time band, in the example shown in FIG. 3, the time band color is not given to a portion before PM 09:00 in the program cell of the program "fishing".

In the example of FIG. 3, although the time band color is given within the time band display portion 29, it may be constituted such that the time band color is not given to the time band display portion 29.

Incidentally, the specific time band to which the time band color is to be given and the corresponding time band color may be determined and set in advance at the time of shipping the receiving apparatus on the manufacturing side, or may be set by the user. For example, a time band, in which the user often watches the TV according to his or her life pattern, may be set as the specific time band by the user. The information indicative of the correspondence or relationship between the specific time band and the time band color is also stored in the ROM 15 or the RAM 16.

The portion where the genre color and the time band color are overlapped with each other may be displayed so as to be differentiated from each of the genre color and the time band color by using a display manner different from each of the genre color and the time band color (e.g., using a different color, a different pattern and the like). In FIG. 3, for example, an overlapped portion 39, which is overlapped with the genre color corresponding to the sport and the time band color corresponding to the golden time, is displayed by using a color different from each of those colors (in FIG. 3, since the colors cannot be expressed, it is indicated by using black as a matter of convenience). By this, it is possible to emphatically display the program of each genre belonging to the specific time band indicated by the time band color, differently from the normal genre color and the normal time band color.

In addition, the overlapped portion of the genre color and the time band color may be expressed by using various displaying methods. For example, as one displaying method here, in case that the genre color is "red" and that the time band color is "blue", the overlapped portion 39 of those colors may be simply expressed by "purple" which is the composite color of those two colors. As another displaying method here, the time band color may be expressed by transparent color on the genre color as the base thereof, by employing the α blending method for example. Further, as another displaying method here, the overlapped portion 39 of the genre color and the time band color may be expressed by only the time band color. Furthermore, it is possible to indicate either one or both of the genre and the time band not by using a color but by using a specific pattern (e.g., applying hatching lines, dots or the like). It is to be noted that the present invention includes any kinds of methods of displaying the overlapped portion 39 of the genre color and the time band color in such a manner that the color and/or pattern of the overlapped portion 39 is differentiated from each of those two colors. In addition, the present invention includes a method of correcting the color and/or pattern so as to prevent the genre color from being visually recognized differently from the original color thereof because the genre color is located at a vicinity of the time band color. The present invention also includes a dynamically display method, such as flashing, moving the hatching lines, moving the dots or the like.

Within a certain program cell 31, a continuation mark 36 is displayed. The continuation mark 36 indicates that the TV program appended with the continuation mark 36 continues in the time axis direction indicated by the continuation mark 36 since the broadcasting time duration of the TV program is too long to be displayed within the TV program table display area 32. For example, although the drama "ABC" is a two hours program starting from PM 9:00 at the 110ch in FIG. 3, the whole of this program cannot be displayed since the time band is limited until PM 10:00. Accordingly, the fact that this program continues after PM 10:00 is indicated by the continuation mark 36. Incidentally, the continuation mark 36, which is directed upward (i.e., ▲ in the figure), indicates that the time band of the program continues in the up direction (i.e., in the direction of earlier in time). On the other hand, the continuation mark 36, which is directed downward (i.e., ▼ in the figure), indicates the time band of the program continues in the down direction (i.e., in the direction of later in time).

The width along the time axis of a short time program (such as a weather forecast, a news or the like) for 3 to 5 minutes may be too short to display the character or text indicating the title of the TV program in the EPG display. In such a case, only the program cell may be shown in the EPG display, so that the content of the short program is shown in the summary information field 35 when the user selects such a short program cell. By this, the user can check the content of such a short time program.

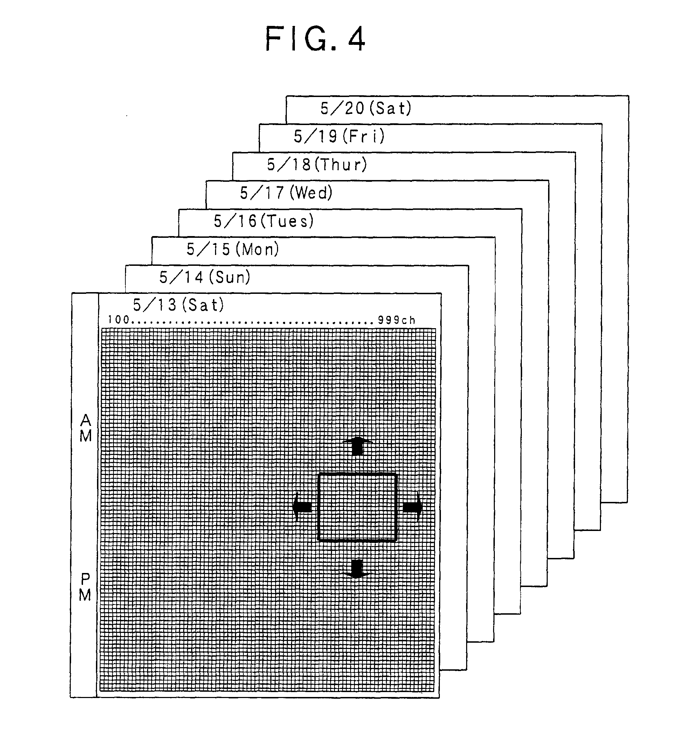

FIG. 4 is a diagram schematically showing the data structure of the day-of-week EPG. As described above, in the day-of-week EPG, the TV program tables for eight days from today to the same day-of-week next week are displayed for each day. Namely, it may be considered such that one TV program table for all channels for each day-of-week is one sheet of a day-of-week EPG sheet 38 and that such a day-of-week EPG 38 is prepared for each day from today until 7 days ahead. Therefore, if the user specifies "today" in the day-of-week tab 34 in FIG. 3, the program table for today is displayed as shown in FIG. 3. If the user specifies "14 (Sun)" in the day-of-week tab 34 in FIG. 3, the program table for May 14^{th}, 2000 (which is tomorrow) is displayed.

The portion displayed as the day-of-week EPG 30 as shown in FIG. 4 is only a portion of one sheet of the day-of-week sheet 38. The display example of FIG. 3 is an example of the day-of-week EPG at PM 07:00 on May 13^{th} (Sat), so that the TV program table from 100ch to 140ch in the time band from PM 07:00 to PM 10:00 is shown. Here, if the user operates the remote controller 12 so as to move the cursor 33 out of the currently displayed range, the program display area 32 shown in FIG. 4 is moved. As a result, one or both of the time band and the channel band of the day-of-week EPG 30 to be displayed is or are changed.

Next, the genre EPG display will be explained. FIG. 5 shows one example of the picture plane of the genre EPG. The genre EPG 60 has a summary information field 35 for displaying the summary information of a program, which is currently selected, and the date and time information at an upper portion thereof in the same manner as the day-of-week EPG of FIG. 3. Below and left side of the summary information field 35, the genre EPG 60 also has a genre list display portion 61 and a program cell display portion 66 on the right side thereof.

The genre list display portion 61 displays a list of the main genres. Within the genre list display portion 61, a plurality of genre items 63 are shown, and the genre item which is currently selected by the user is indicated by a cursor 62. By operating the remote controller 12, the cursor 62 can be moved up and down direction. In addition, although, in case of the genre EPG 60 of FIG. 3, the sub genres are not displayed, it is possible to display the sub genres by the operation. On the left side of the genre list display portion 61, there is prepared a genre color display portion 65. Incidentally, the genre color may include a pattern in addition to the color. For the sake of the convenience of the figures, the example of FIG. 5 indicates a case of expressing the genre colors by various patterns.

In the program cell display portion 66, the program or programs after the present time among the programs corresponding to the main genre, which is selected by the cursor 62 in the genre list display portion 61, are displayed. In case that there are a plurality of programs satisfying such a condition to be displayed, the programs are arranged in the order of the earlier broadcasting time and the smaller channel number. The cursor 67 indicates the program, which is currently selected by the user.

Each program cell 69 displayed within the program cell display portion 66 is displayed with the genre color corresponding to its main genre. In correspondence to the case of the day-of-week EPG, the time band color is also introduced here. Namely, as explained in the example of FIG. 3, assuming that the time band color is defined with respect to the golden time, the first to third program cells are displayed with the same time band color, as indicated by a reference mark 68 in FIG. 5. As a result, in the first to third program cells, the genre color and the time band color are overlapped with each other, so that the color-overlapped portion is displayed with a different color to be differentiated from other portions. By this, in the genre EPG, it is also possible to easily recognize the programs belonging to the specific time band.

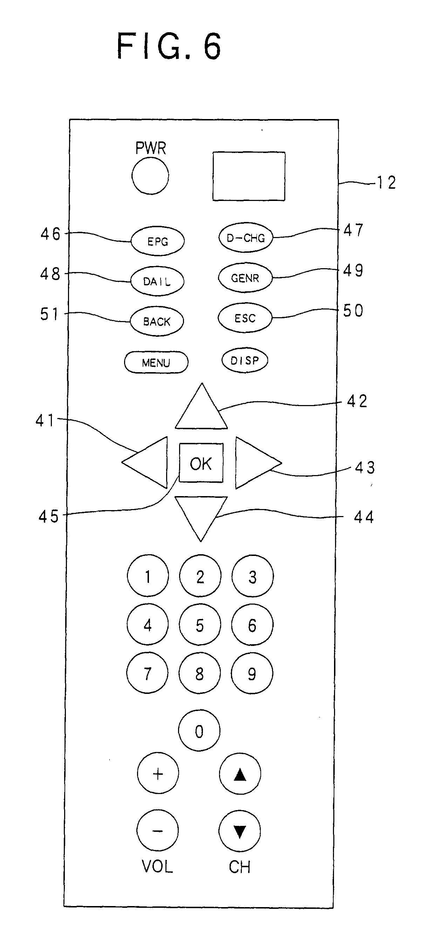

FIG. 6 shows an appearance of the remote controller 12, which is used together with the receiving apparatus 1 of the present invention. Among function keys provided on the upper portion of the remote controller 12, an EPG key 46 is a key to display the EPG picture plane as shown in FIG. 3. Namely, under a condition that a normal program is viewed, if the EPG key 46 is pressed, the picture plane of the TV display is changed from the normal program picture plane to the EPG picture plane as shown in FIG. 3. It is also possible to superimpose such an EPG picture plane on the normal program picture plane. Further, if the EPG key 46 is pressed under a condition that the EPG picture plane is displayed, it is changed back to the original program picture plane. A "day-of-week" ("DAIL") key 48 is located below the EPG key 46, and is to display the day-of-week EPG as shown in FIG. 3.

A "day-of-week changing" ("D-CHG") key 47 is located at a right side of the EPG key 46, and is used to change the day-of-week of the program table in the display. Further, a "genre" ("GENR") key 49 is located below the day-of-week changing key 47, and is to change the EPG picture plane from the day-of-week EPG to the genre EPG. An ESC key 50 is located below the genre key 49, and is used to change from the EPG picture plane back to the normal program picture plane. A BACK key 51 is used to cancel an instruction inputted beforehand and returns to the condition before this instruction is inputted.

A "menu" key 52 is located below the BACK key 51, and is used to select one of various functions of the receiving apparatus. In case that the "genre skip mode", which will be described later in detail is to be initiated, selectable candidates of various modes are displayed on the TV display by pressing the menu key 52, and the "genre skip mode" is selected from among them.

Cursor movement keys (keys 41 to 44) are disposed at a substantial center of the remote controller 12, and are used to move a position of the cursor 33 in FIG. 3. Under a condition of the display as shown in FIG. 3, if a leftward key 41 is pressed, the cursor moves leftward to an adjacent program cell, while the cursor 33 moves rightward to an adjacent program cell if a rightward key 43 is pressed. Further, if an upward key 42 is pressed, the cursor moves upward to an adjacent program cell, while the cursor 33 moves downward to an adjacent program cell if a downward key 44 is pressed.

Under a condition that the cursor 33 is just moved by the keys 41 to 44, the selection of the program is not yet confirmed on the processes of the receiving apparatus 1. After the cursor 33 is moved, the selection of the program is confirmed by pressing the confirmation ("OK") key 45. For example, under a condition shown in FIG. 3, the receiving apparatus 1 is receiving the program "soccer ○○VSΔΔ" at 130ch. Here, if the user presses the rightward key 43, the cursor 33 is moved rightward to the program cell of "seven", which is on the right side within the TV program table display area 32. However, the program, which the receiving apparatus 1 is presently receiving, is still the "soccer ○○VSΔΔ". After that, if the user presses the decision key 45, the receiving apparatus 1 changes the reception channel from 130ch to 140ch, so that the reception of the program "seven" is started and the received image of this program "seven" is displayed.

In case that the program cell, which is ahead (in the future) of the present time, is specified by the keys 41 to 44 and the decision key 45, the reservation picture plane for the TV program corresponding to this specified program cell is normally displayed. By performing an operation instructed by the reservation picture plane, it is possible for the user to view or make a reservation of this TV program. Also, in case that the past TV program information is to be erased by sequentially updating the SI, if the program cell in the past is specified, such a message may be displayed that the TV program corresponding to this specified program has already been broadcasted.

Incidentally, the other keys of the remote controller 12 shown in FIG. 6 are related to the normal reception of the TV program, and they are not directly related to the present invention. Thus, the explanations thereof are omitted.

### (V) EPG Display Process

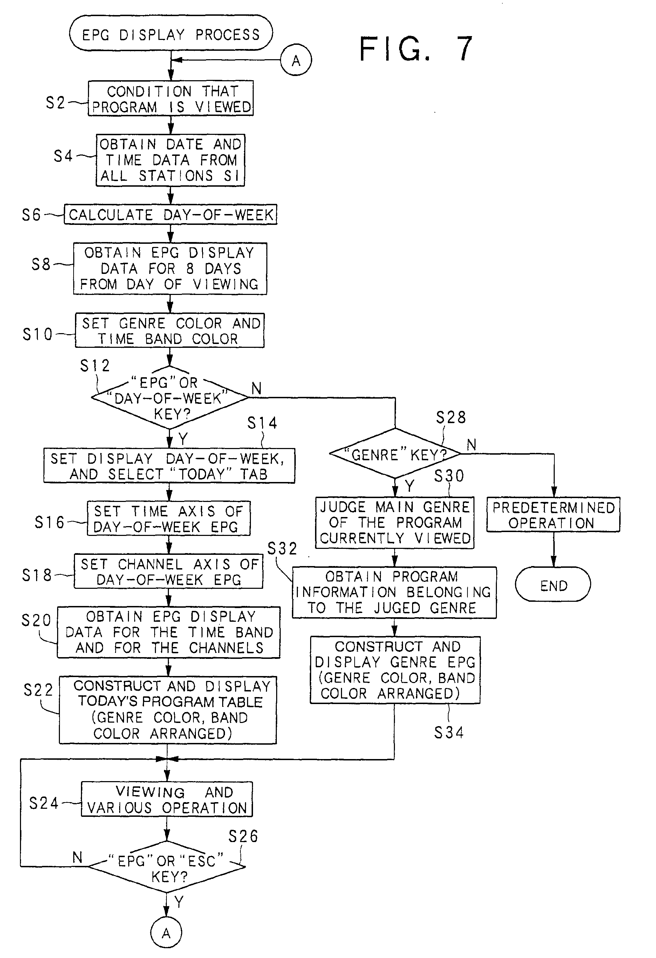

Next, the EPG display process is explained with reference to flowchart of FIG. 7. The processes explained hereinafter are mainly performed as the CPU 17 shown in FIG. 1 executes a predetermined process program stored in the ROM 15, to thereby control the RAM 16, the display processor 9 and so on within the receiving apparatus 1.

FIG. 7 shows an EPG display process including a process of displaying the genre color and the band color according to the present invention.

Now, the receiving apparatus 1 is assumed in such a condition that user operates the receiving apparatus 1 to receive a desirable channel and the corresponding program is being viewed (step S2). At first, the receiving apparatus 1 extracts the all stations SI from the TS of the channel, which is currently received, and obtains the date and time data included in this all stations SI (step S4). In the present system, the management of the date and time data is performed on the broadcasting station side, which transmits the broadcasting wave, and the present date and time data is included in the all stations SI. Thus, the receiving apparatus 1 obtains the date and time data out of the received wave. Next, the receiving apparatus 1 calculates the day-of-week of today i.e., the day of currently viewing the program, from the obtained date and time data (step S6). Normally, since the day-of-week information is not included in the date and time data from the satellite, the day-of-week is determined from the date and time data by using a predetermined calendar calculation.

Then, the EPG display data for 8 days from today i.e., the day of currently viewing the program is obtained as the data for the day-of-week cells of the day-of-week EPG, on the basis of the date and time data and the day-of-week data determined in the above mentioned manner (step S8). As described before, the EPG text data are stored in the RAM 16, which have been made of the all stations SI as the source. Thus, the CPU 17 obtains the corresponding data within the RAM 16, and combines it with the font data within the ROM 15 and the graphic data within the flash memory 14, to thereby constitute the EPG display data and store it into the working memory. The EPG display data constituted in this manner schematically becomes as the image shown in FIG. 4.

In addition, in this EPG display data, the information corresponding to each program cell such as a genre, a broadcasting time band or the like is included.

Next, with respect to each program portion of the EPG display data constituted in this manner, the genre color and the time band color are set (step S10). As mentioned before, each program is categorized into one of a plurality of genres, and the EPG display data includes the genre information of respective one of the programs. Thus, the CPU 1 sets the genre color data with respect to the data of each program cell in accordance with the information indicative of the correspondence or relation between each genre and each genre color, which is set in advance and is stored in the RAM 16 or the like. On the other hand, since data of each program cell includes the broadcasting time band information, the CPU 1 sets the time band color with respect to the program cell in accordance with the information indicative of the correspondence or relation between the specific time band and the time band color set in advance. In addition, those coloring processes are processes of setting the color data on the data, and the process of actually coloring the program cell on the display is performed later.

Next, it is judged whether or not the EPG key 46 or the day-of-week key 48 (refer to FIG. 6) is pressed by the user (step S12). If it is pressed (step S12: YES), the day-of-week of viewing in the day-of-week EPG to be displayed is set to today, so that the day-of-week tab 34 for "today" is set into the selected condition (step S14, refer to FIG. 3). Next, the receiving apparatus 1 sets the time axis of the day-of-week EPG to be displayed (step S16). This is done by setting the time of the display lead shown in the time band display area 29 to the lead of the unit time, in which the present time is included. Namely, if the present time is X hour Y minute, the time of the display lead is set to X hour 0 minute. For example, since the present time is PM 07:10 in the example of FIG. 3, the time band display area 29 is set such that the time of the display lead is PM 07:00.

Next, the receiving apparatus 1 sets the channel axis of the day-of-week EPG to be displayed (step S18). Namely, the receiving apparatus 1 maintains the channel axis, which has been viewed at the time when the user presses the EPG key 46 or the day-of-week key 48. Then, the receiving apparatus 1 determines the range to be displayed as the program table (step S20). For example, if the size of the program table, which can be simultaneously displayed, is set to ·"m hours" in the time axis direction and the "n channels" in the channel axis direction by the setting of the receiving apparatus 1, the display range is determined as corresponding to the m hours from the display lead time set at the step S18 and corresponding to the m channels from the display lead channel set at the set S16. Then, the EPG data corresponding to this determined display range is obtained.

Next, by using the EPG display data obtained in this manner, the CPU 17 and the display processor 9 constitute the program table today, to thereby display it on the TV display (step S22).

At this time, the genre color display portion 37 of each program cell is displayed on the TV display with the genre color set at the step S10. Also, in case that the time band set at the step S16 includes the specific time band, the display with the corresponding time band color is performed. Thus, as shown in FIG. 3, the genre color corresponding to the genre of the content of each program is displayed in the genre color display portion 37 within each program cell 31. Further, in case that the currently displayed time band includes the specific time band, such as the early morning, the golden time etc., the time band color 39 is also displayed. As a result, the overlapped portion of the genre color and the time band color is displayed outstandingly by using a color, a pattern or the like so as to be differentiated from those two colors.

In this manner, the day-of-week EPG as shown in FIG. 3 is displayed. The user performs various operations while inspecting this program table (step S24). Then, the receiving apparatus 1 judges whether or not the EPG key 46 or there ESC key 50 is pressed by the user (step S26). If it is pressed (step S26: YES), the EPG display is ended since it is judged that the user instructs to end the EPG display, and the display condition is returned to the program viewing condition.

On the other hand, at the step S12, if the "EPG" key 46 or the "day-of-week" key 47 is not pressed (step S12: NO), it is judged whether or not the "GENRE" key 49 is pressed (step S28). If it is pressed (step S28: YES), the process of displaying the genre EPG is performed since it is judged that the user instructs to display the genre EPG. Namely, at first, the CPU 17 judges the main genre of the currently viewed program on the basis of the all stations SI, which is being received (step S30). For example, in case that the user is viewing a movie, the main genre is judged to be the "movie" genre. In case that the user is viewing a soccer game, the main genre is judged to be the "sport" genre. Then, the CPU 17 extracts the program information of the programs in the predetermined number from the present time toward the future, which belong to the judged main genre, from among the programs included in the EPG display data obtained at the step S8. The CPU 17 arranges the extracted programs in the order of the broadcasting date and time and in the order of the channel numbers (step S32). Then, the CPU 17 and the display processor 9 display the program information obtained in the above explained manner on the display (step S34).

In this manner, the genre EPG exemplified in FIG. 5 is displayed. At this time, since each program cell 69 is displayed with the genre color set at the step S10, all of the program cells 69 within the program table display portion 66 (e.g., the programs No. 1 to No. 9, in the example of FIG. 5) are displayed with the same genre color. Also, the time band color is additionally given to the program cell 69 of the program belonging to the specific time band (e.g., the programs No. 1 to No. 3, in the example of FIG. 5). As a result, the programs No. 1 to No 3 are displayed outstandingly with a color, a pattern etc., different from the original genre color or time band color.

After displaying the genre EPG, the user performs various operations while inspecting this program table (step S24). Then, the receiving apparatus 1 judges whether or not the EPG key 46 or there ESC key 50 is pressed by the user (step S26). If it is pressed (step S26: YES), the EPG display is ended, and the display condition is returned to the program viewing condition. In addition, if the genre key 49 is not pressed at the step S28 (step S28: NO), a predetermined process in response to another key operation or the like is performed, and the process is ended.

Incidentally, the genre EPG display process at the steps S30 to S34 is actually performed even if the genre key 49 is pressed under a condition that the day-of-week EPG is displayed since the day-of-week EPG is selected at the step S12. However, for the sake of simplicity of the explanation, it is assumed that the genre EPG display process is initiated by pressing the genre key 49.

### (V) Channel Color Display

Next, the channel color display will be explained as another embodiment of the present invention.

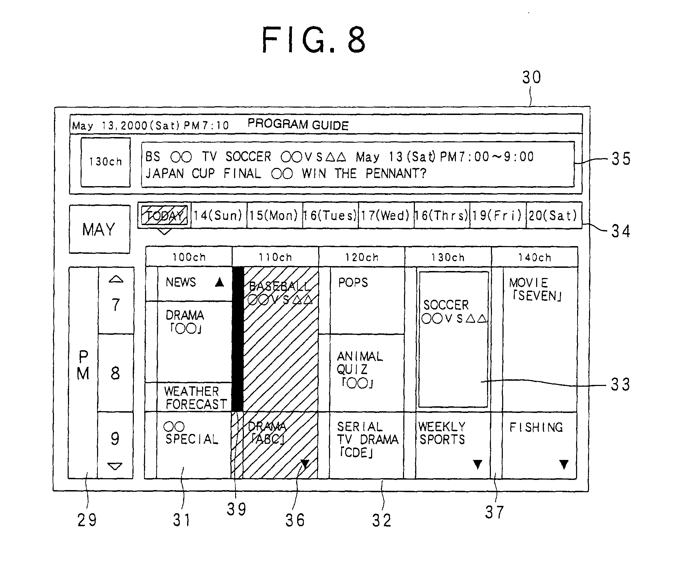

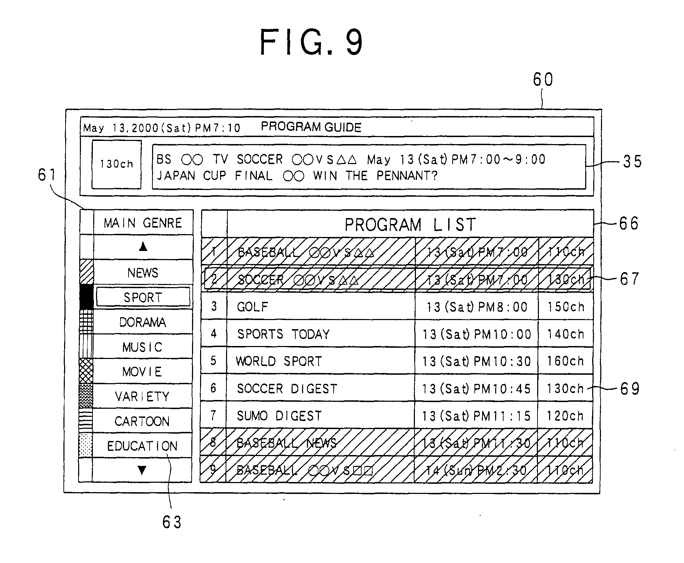

The channel color display is a function of displaying the program cell of a user's favorite channel, which is registered in advance, with a color corresponding to the user's favorite channel. The user selects his or her favorite channel in advance and determines the color corresponding to this channel in advance. The correspondence information indicative of this correspondence between the user's favorite channel and the color may be stored in the RAM 16. When the instruction to display the day-of-week EPG or the genre EPG is issued, the CPU 17 and the display processor 9 display the program cell of the user's favorite channel with the corresponding channel color by referring to this correspondence information indicative of the channel color. A display example of the day-of-week EPG is shown in FIG. 8 and a display example of the genre EPG is shown in FIG. 9, in case that the user registers the 110ch as the favorite channel. In FIG. 8 and FIG. 9, the program cells of the 110ch are displayed by the corresponding channel color. By this, it is possible for the user to easily recognize the programs of the favorite channel on the day-of-week EPG as well as the genre EPG.

The process of displaying the channel color is performed in a following manner on the flowchart shown in FIG. 7. At first, at the step S10, the CPU 17 refers to the aforementioned correspondence information for the genre color, and thereby sets the channel color to the program cell of the corresponding channel. In case that the day-of-week EPG is to be displayed, at the step S22, the CPU 17 and the display processor 9 display the program cell with the channel color according to the setting performed at the step S10. In the same manner, in case that the genre EPG is to be displayed, at the step S34, the CPU 17 and the display processor 9 display the program cell with the channel color in accordance with the setting at the step S10.

In addition, it is also possible to display the channel color together with the genre color and/or the time band color. In such a case, it is further possible to display an overlapped portion of (i) the channel color and (ii) the genre color and/or the time band color, in a display manner different in the color, the pattern etc., from the genre color and/or the time band color. The genre color may be wholly given or partially given to each program cell.

As described above, according to the present embodiment, each program cell is displayed with the genre color for each genre, in both cases of the day-of-week EPG and the genre EPG. Further, the program in the time band set in advance is displayed with the corresponding time band color, and the overlapped portion of the genre color and the time band color is displayed in the display manner different in the color and/or pattern from the genre color and the time band color. Thus, it is possible for the user to easily recognize and find out the program of each genre in the specific time band. Furthermore, it is possible for the user to easily find out the program of his or her favorite channel by the function of displaying the channel color.

## Claims

1. A program guide displaying apparatus (1) **characterized in that** the apparatus comprises:
a program information obtaining device (3 to 7) for obtaining program information including information indicative of a program name, a genre name, a start time, a length of a program or an end time, a broadcasting channel and a broadcasting date of respective one of a plurality of programs;
a setting device (12, 13, 17) for setting a specific condition with respect to at least one of a time and a channel of the program; and
a displaying device (8, 9, 200) for displaying a first program table, in which a plurality of program information for the programs are displayed in a 2-dimension of a time axis and a channel axis, and a second program table, in which the plurality of program information for the programs are edited for each genre, such that a portion of each program within the first program table and a portion of each genre within the second program table are displayed in a common display manner, which is differentiated for each genre, and that a portion of each program, which satisfies the specific condition set by the setting device is displayed in a display manner different from that for a portion of each program, which does not satisfy the specific condition set by the setting device.

2. A program guide displaying apparatus (1) according to claim 1, **characterized in that** the displaying device (8, 9, 200) displays the first program table and the second program table such that the portion of each program within the first program table and the portion of each genre within the second program table are displayed with a same color for each genre.

3. A program guide displaying apparatus (1) according to claim 1, **characterized in that** the displaying device (8, 9, 200) displays the first program table and the second program table such that the portion of each program within the first program table and the portion of each genre within the second program table are displayed with a same pattern for each genre.

4. A program guide displaying apparatus (1) according to any one of claims 1 to 3, **characterized in that** the displaying device (8, 9, 200) displays the first program table and the second program table such that the portion of each program, which satisfies the specific condition, is displayed with a color different from that for the portion of each program, which does not satisfy the specific condition.

5. A program guide displaying apparatus (1) according to any one of claims 1 to 3, **characterized in that** the displaying device (8, 9, 200) displays the first program table and the second program table such that the portion of each program, which satisfies the specific condition, is displayed with a pattern different from that for the portion of each program, which does not satisfy the specific condition.

6. A program guide displaying apparatus (1) according to any one of claims 1 to 5, **characterized in that** the displaying device (8, 9, 200) displays the first program table and the second program table such that an overlapped portion of the portions displayed in different display manners from each other is displayed in a further different display manner.

7. A program guide displaying method **characterized in that** the method comprises:
a program information obtaining process of obtaining program information including information indicative of a program name, a genre name, a start time, a length of a program or an end time, a broadcasting channel and a broadcasting date of respective one of a plurality of programs;
a setting process of setting a specific condition with respect to at least one of a time and a channel of the program; and
a displaying process of displaying a first program table, in which a plurality of program information for the programs are displayed in a 2-dimension of a time axis and a channel axis, and a second program table, in which the plurality of program information for the programs are edited for each genre, such that a portion of each program within the first program table and a portion of each genre within the second program table are displayed in a common display manner, which is differentiated for each genre, and that a portion of each program, which satisfies the specific condition set by the setting process is displayed in a display manner different from that for a portion of each program, which does not satisfy the specific condition set by the setting process.

8. A program guide displaying method according to claim 7, **characterized in that** the displaying process displays the first program table and the second program table such that the portion of each program within the first program table and the portion of each genre within the second program table are displayed with a same color for each genre.

9. A program guide displaying method according to claim 7, **characterized in that** the displaying process displays the first program table and the second program table such that the portion of each program within the first program table and the portion of each genre within the second program table are displayed with a same pattern for each genre.

10. A program guide displaying method according to any one of claims 7 to 9, **characterized in that** the displaying process displays the first program table and the second program table such that the portion of each program, which satisfies the specific condition, is displayed with a color different from that for the portion of each program, which does not satisfy the specific condition.

11. A program guide displaying method according to any on of claims 7 to 9, **characterized in that** the displaying process displays the first program table and the second program table such that the portion of each program, which satisfies the specific condition, is displayed with a pattern different from that for the portion of each program, which does not satisfy the specific condition.

12. A program guide displaying method according to any one of claims 7 to 11, **characterized in that** the displaying process displays the first program table and the second program table such that an overlapped portion of the portions displayed in different display manners from each other is displayed in a further different display manner.
